# EUROPEAN PATENT SPECIFICATION

(11) **EP 1 892 894 B1**
(45) Date of publication and mention of the grant of the patent: **04.03.2009**
(21) Application number: 06119460.1
(22) Date of filing: 24.08.2006
(51) Int. Cl.: H04L 12/56

(54) **Packet flow control in a communication network based on flow control agents**
Paketflusskontrolle in einem Kommunikationsnetzwerk basierend auf Paketflusskontrollagenten
Contrôle de flux de paquets dans un réseau de communication basé sur des agents de régulation du flux de paquets

(43) Date of publication of application: 27.02.2008
(73) Proprietor: NTT DoCoMo, Inc., Tokyo (JP)
(72) Inventor: Mendes, Paulo, 81673, München (DE); Cerqueira, Eduardo, 3030-049, Coimbra (PT); Curado, Marilia, 3030-393, Coimbra (PT); Monteiro, Edmundo, 3030-393, Coimbra (PT)
(74) Representative: Betten & Resch

(56) References cited:
- US-A1- 2002 087 804
- US-B1- 6 816 903
- US-B1- 6 819 673

## Description

### FIELD OF INVENTION

This invention addresses the field of session adaptation and Quality of Service (QoS) in heterogeneous environments.

### BACKGROUND OF THE INVENTION

Next generation networks are envisioned to be heterogeneous and to support a wide range of services. The heterogeneity may go from access and transport technologies, to mobile users with different devices and capacities. In addition to the above heterogeneity, the communication services, such as multimedia and file-distribution sessions, must be distributed to the requesters, at least, with a minimal level of quality. However, the distribution and the adaptation of the session content to heterogeneous users or groups of users along the session path is a hard task, because it involves domains with different distribution techniques, links with different capacities and users with distinctive requirements.

The problem of session adaptation to different receivers across heterogeneous networks has been tackled for situations where the environment is multicast-aware and QoS-unaware. Existing solutions either require the implementation of proprietary modules on the end-hosts in order to support the needed adaptive control functions, or rely on specific mechanisms to change the content coding in order to meet the diverse requirements from the receivers. However, implementation of extra functionalities on each end-host and the need to change the content coding are not suitable, because they increase the complexity and decrease the flexibility of the environment.

In order to fill this gap, there is the need of a QoS-aware session mechanism that is able to adapt the quality level of the sessions to different receivers across heterogeneous networks and to avoid the upstream and/or downstream waste of network resources when less priority flows of a session are not supported by a domain or an inter-domain link. This mechanism should be able to operate independently of the underlying network distribution techniques and to avoid the implementation of proprietary modules on the end-hosts. Furthermore, this mechanism should support open interfaces, allowing simultaneously an easy interaction with different protocols and mechanisms and a straightforward deployment.

There have been proposals which have addressed the adaptation control problem. However, existing solutions require the implementation of proprietary modules on the end-hosts or need devices in specific places in the network, which are responsible for adapting the content coding to the network bandwidth (e.g. T. Shanableh and M. Ghanabari, "Multilayer Transcoding with Format Portability for Multicasting of Single-Layered Video", IEEE Transaction on Multimedia, vol. 7, number 1, February 2005). Furthermore, most solutions are focused in multicast-aware environments, with the scope limited to multimedia sessions, being, in general, QoS-unaware (e.g. H. Chiu and K. Yeung, "Fast-response Receiver-driven Layered Multicast with Multiple Servers", Communications, 2005 Asia-Pacific Conference on, pp. 259-263, October 2005). Therefore, previous approaches are not suitable to adapt sessions to the current network conditions in heterogeneous networks, because they reduce the system flexibility, present scalability problems and increase the complexity of the environments.

In the following some known techniques are briefly explained, highlighting the applicability scope and explaining why they are not suited for heterogeneous networks.

The adaptive control schemes, presented in the literature, are used to adapt sessions (especially multimedia sessions) to different receivers or to react to changes in network conditions. In general, the approaches can be classified as sender-based, receiver-based and transcoder-based.

An example of the sender-based control scheme is the approach "On the Use of Sender Adaptation to Improve Stability and Fairness for Layered Video Multicast" proposed by Wu et al. in Proceedings of the Second International Workshop on Quality of Service in Multiservice IP Networks, pp. 347-357, February 2003, which improves stability and fairness of the receiver, by employing dynamic channel rate allocation, at the sender. However, this approach only supports Best-Effort services without guaranteeing the session quality level. Moreover, sender-based rate adaptation performs poorly in a heterogeneous multicasting environment, because there is no single target rate, where the quality requirement of different receivers cannot be satisfied simultaneously with one transmission rate.

McCanne et al (S. McCanne, V. Jacobson and M Vetterli, "Receiver-driven Layered Multicast", In proc. of SIGCOMM Symposiums on Communication Architecture and Protocols, pp. 117-130, August 1996) proposed a "Receiver-driven Layered Multicast" (RLM) scheme for multicast multimedia transmission over the Internet. After that, some other proposals were presented to allow streaming of multimedia content to different receivers (e.g. P. Mendes, H. Schulzrinne and E. Monteiro, "A Receiver-driven Adaptive Mechanism Based on the Popularity of Scalable Sessions", Third COST 263 International Workshop on Quality of future Internet Services (QoflS), October 2002) which includes a simple receiver-based adaptive mechanism named SAM. Receivers use SAM to adapt the perceptual quality of the displayed video stream to the current condition of the network, information that is provided by SAPRA. Receivers first join the multicast group for the most important flow and then SAM controls the perceptual quality by joining and dropping additional flows. However, the approaches need extra workload/modules in the sender, receiver or both, increasing the system complexity and decreasing the flexibility. Moreover, it requires the support of the IP multicast technology in the networks, limiting its usage to multicast environments and does not support the interaction with QoS mapping-alike schemes to request readjustment of the flows of sessions into another network service class.

An adaptive approach that seems to be suitable for heterogeneous environments consists in the transcoder-based schemes (e.g. R. Hayder, S. Mihaela and K. Shirish, "Scalable Video TranScaling for the Wireless Internet", EURASIP Journal on Applied Signal Processing (JASP), number 2, pp. 265-279, February 2004) which place network elements at appropriate locations to deliver different levels of quality to network regions with different types of connectivity or different levels of congestion. The video transcoder-based technique can be applied over single-user unicast sessions and/or multi-user multicast sessions. For example, the approach Scalable Video TranScaling for the Wireless Internet of Hayder et al. proposes a transcoder-based mechanism called TranScaling. With TranScaling, a multimedia session, that covers a given bandwidth range, is mapped into one or more distribution channels covering different bandwidth ranges. Different gateways of different access networks can perform the desired transcaling operations that are suitable for their own local domains and devices attached to them. However, the trasncoder-based scheme increases the complexity of network devices requiring high memory and CPU consumption, presents scalability problems because the transcoder elements need to perform video encoding, decoding and re-encoding for sessions with different codecs along the session path. Moreover, this approach does not avoid the upstream or downstream waste of network resources as well as the interaction with external mechanism to allow the reallocation of flows of a session into another class of service.

In general, most of the approaches are limited to a unique IP distribution technique (e.g. IP multicast), limiting their usage in heterogeneous environments, such as the future next generation networks. Moreover, the implementation of proprietary modules on each end-host and the need of change in the content coding are not suitable solutions, because they reduce the flexibility and increase the system complexity. Furthermore, some proposals do not consider the required quality level of the session as well as the flexible adaptation decisions (e.g. the cost of service that the receivers are willing to pay) to perform the adaptation process, and the distribution of other types of sessions/services, such as data-content or file-distribution services is not supported by the current adaptive mechanisms.

US-6,816,903 discloses a method and system for monitoring or profiling quality of service within one or more information sources in a network of computers. The method includes a step of providing a network of computers, each being coupled to each other to form a local area network. The network of computers has a firewall server coupled to the network of computers and a distributed traffic management tool coupled to the firewall server. The method also includes implementing traffic monitoring or profiling of incoming and outgoing information from one of the information sources.

### SUMMARY OF THE INVENTION

According to one embodiment there is provided a method for adapting a session between a source and a receiver through a network, whereas the session originating from a source is composed of a plurality of flows which together form the session, whereas said session passes through a plurality of network nodes from said source to said receiver, whereas a plurality of adaptation agents are provided in said network, each adaptation agent being capable of running an adaptation mechanism by adding a flow to or dropping a flow from said session, each adaptation agent being responsible for one or more network nodes along the path from the source to said receiver, said method comprising:
receiving by one of said adaptation agents network parameters indicating the network usage;
running a deciding mechanism to decide by said adaptation agent how to adapt said session to said network usage;
add or drop one or more flows to or from said session;
inform a resource allocation mechanism provided in said network to allocate or release network resources in accordance with said added or dropped flow;
inform upstream and/or downstream adaptation agents about the new session composition.

The method provides an efficeint use of resources through session adaptation even in heterogeneous environments while making instatllations of proprietary modules on end-hosts unnecessary.

According to one embodiment instead of or in addition to said adding or dropping of flows said deciding mechanism decides to reallocate one or more flows of said session to a different service class than the present one; and
instead of said resource allocation mechanism a quality of service mapping mechanism is informed about the decision of said deciding mechanism.

This allows the interaction with a QoS mechanism and a QoS aware session mapping.

According to one embodiment instead of or in addition to said adding or dropping of flows said deciding mechanism decides to request said resource allocation mechanism to readjust resources for a class of service.

This allows the readjustment of network resources to assure, for instance, the full bandwidth committed for each flow of a session.
According to one embodiment each flow has assigned to it a priority, and said deciding mechanism decides on said adding or dropping of flows based on said priority of said flows.

This allows for an efficient service adaptation which respects the priorities of individual flows.

According to one embodiment said network usage information contains information about whether sufficient network resources are available or not, and
if the network resources are not sufficient the deciding mechanism decides to drop one or more flows, and
if the network resources are sufficient, it is decided to add one or more flows.

This adapts the session to the actual network condition, whereas e.g. a network congestion may be taken into account as it occurs and again as it disappears.

According to one embodiment the method comprises:
maintaining state of the flows of said session to indicate whether they are awake or asleep; whereas
   adding a flow to session corresponds to putting it into an awake state, and dropping a flow to session corresponds to putting it into an sleeping state;
   each of said states being reversible.

This means that a dropped session is not lost but can be reactivated if the conditions allow for it.

According to one embodiment there are a plurality of sessions, and said deciding mechanism comprises selecting one or more of the sessions to be adapted among said plurality of sessions, whereas said selection is based on one or more of the following criteria:
selecting the sessions with the lowest audience size for adaptation;
selecting the sessions with the lowest cost for adaptation;
selecting preferably video sessions over audio sessions for adaptation.

This allows to adapt to the different priorities of different sessions.

According to one embodiment an adaptation agent receiving information from another adaptation agent about a new session composition decides based on the location of said adaptation agent in the path of said session from said receiver to said source and based on whether said adaptation agent has a branch point for said session as to whether it adds or drops said flow and as to whether this information is to be forwarded further upstream or downstream.

This has the effect that in case where a flow is still needed, e.g. because the network node has a branching point for the session and in a different branch the flow is still needed, the node may still maintain it by not dropping it. Moreover, this takes also into account for a possible heterogeneous character of the network, whereas for one domain the flow may have been dropped but for the other it is still maintained.

According to one embodiment there is provided an agent for adapting a session between a source and a receiver through a network, whereas the session originating from a source is composed of a plurality of flows which together form the session, whereas said session passes through a plurality of network nodes from said source to said receiver, said adaptation agent being one of a plurality of adaptation agents which are provided in said network, each adaptation agent being capable of running an adaptation mechanism by adding a flow to or dropping a flow from said session, each adaptation agent being responsible for one or more network nodes along the path from the source to said receiver, said adaptation agent comprising:
an interface for receiving network parameters indicating the network usage;
a deciding module to decide how to adapt said session to said network usage;
an add/drop module for adding or dropping one or more flows to or from said session;
an resource information module for informing a resource allocation mechanism provided in said network to allocate or release network resources in accordance with said added or dropped flow;
an upstream/downstream information module for informing upstream and/or downstream adaptation agents about the new session composition

According to one embodiment instead of or in addition to said adding or dropping of flows said deciding module decides to reallocate one or more flows of said session to a different service class than the present one; and
instead of said resource allocation mechanism a quality of service mapping mechanism is informed about the decision of said deciding mechanism.

According to one embodiment instead of or in addition to said adding or dropping of flows said deciding module decides to request said resource allocation mechanism to readjust resources for a class of service.

According to one embodiment each flow has assigned to it a priority, and said deciding mechanism decides on said adding or dropping of flows based on said priority of said flows.

According to one embodiment the agent comprises:
a maintaining module for maintaining state of the flows of said session to indicate whether they are awake or asleep; and whereas
   adding a flow to session corresponds to putting it into an awake state, and dropping a flow to session corresponds to putting it into an sleeping state;
each of said states being reversible.

According to one embodiment said deciding module decides based on the location of said adaptation agent in the path of said session from said receiver to said source and based on whether said adaptation agent has a branch point for said session as to whether it adds or drops said flow and as to whether this information is to be forwarded further upstream or downstream if the adaptation agent received information about the new session composition from another adaptation agent.

### BRIEF DESCRIPTION OF THE DRAWINGS

Fig. 1 schematically illustrates a communication environment where an embodiment of the invention may be used.
Fig. 2 schematically illustrates a network environment implementing an embodiment of the invention.
Fig. 3 schematically illustrates a configuration of an adaptation agent according to an embodiment of the invention.
Fig. 4 shows a flowchart illustrating schematically the operation of an embodiment of the invention.
Fig. 5 shows a flowchart illustrating schematically the operation of a further embodiment of the invention.
Fig. 6 schematically illustrates a network environment implementing a further embodiment of the invention.
Fig. 7 schematically illustrates a network environment implementing a further embodiment of the invention.

### DETAILED DESCRIPTION

In the following embodiments of the invention will be described in detail. At first some terms used in the following description are briefly explained.
- Autonomous Systems (AS): either a single network or a group of networks that is controlled by a common network administrator on behalf of a single administrative entity;
- Domain: a set of nodes that operates with a common set of service policies. In this proposal, a domain is seen as an AS;
- Downstream: in the same direction as the data flow;
- Upstream: in the opposite direction of the data flow;
- Session: a session defines the communication between a user (or user agent) and a peer. A session can be composed by a number of flows (1 to N) such that it comprises a set of session-flows. A session may be received by one or more receivers (from 1 to M, M being a natural number)
- Asleep flow: flow of a session that was dropped from the data plane by a SAQUE agent;
- Awaked flow: flow of a session that was added to the data plane by an SAQUE agent;
- SAQUE agent: an entity in the network which implements the SAQUE mechanism for adapting sessions in accordance with embodiments of the invention
- Data plane: set of network functionalities used to process data packets, This is opposite to control plane, which is a set of network functionalities used to process control packets, as the ones used by network protocols.
- Distribution channel: a unicast flow or a multicast tree to which the flow of a session was associated in the domain or between domains. A multicast tree can be identified by a Source Specific Multicast (SSM) channel (see RFC 3569)

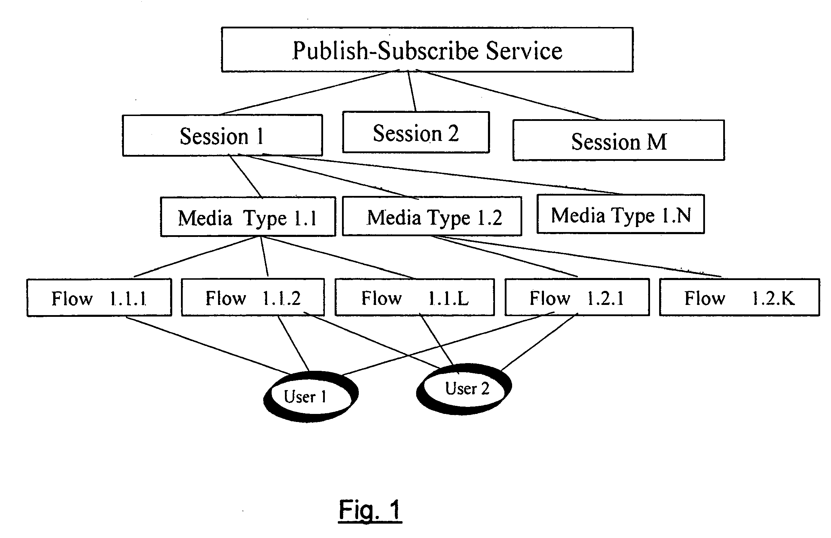

Fig. 1 illustrates an environment in which embodiments of the invention may be used. A publish-subscribe service may have different multi-user sessions, such as IPTV services having different programs, each corresponding to a session. Each session may comprise (optionally) multiple media types, such as audio, video, and TV rating. One media type (e.g. video) then may be comprised of several flows, by using MPEG4 codecs for instance. Users may then individually wish to join a session, as schematically illustrated in Fig. 1.

According to one embodiment there is provided a QoS(quality of service)-aware session adaptation mechanism, (hereinafter referred to as SAQUE mechanism or in short SAQUE), which adapts the quality level of multi-user sessions to the current network conditions, by dropping or adding the low priority flow(s) of sessions. Thus, receivers subscribe to the available sessions (e.g. maximum quality - all flows of a session) and the SAQUE mechanism adjusts the number of flows of a session according to the actual conditions of the networks, for instance, based on the current link capability and flows priority. The session adaptation process can also be performed by the interaction with a QoS mapping scheme, for instance by requesting the reallocation of flows or sessions into another network service class. Furthermore, SAQUE aims to avoid the upstream and/or downstream waste of network resources when less priority flows of a session are not supported by a domain or between domains.

According to one embodiment there is provided a session adaptation agent for session adaptation (hereinafter referred to as SAQUE agent) which is responsible for carrying out a session adaptation. The SAQUE agent may be a distinct entity in a network, or it may be integrated into another network entity such as a network agent located at the edge of a network and providing access for a receiver or any other device, like other network agents from other networks.

The SAQUE mechanism's QoS-aware characteristic according to one embodiment is achieved by its ability to control the adjustment of multi-user sessions that are mapped into network service classes (e.g. by interacting with a QoS mapping mechanism) or to request the adjustment of network service classes by interacting with a resource allocation controller scheme. Moreover, the SAQUE mechanism according to one embodiment supports the session adaptation over heterogeneous environments through the use of open interfaces. The interfaces allow the interaction with different protocols and mechanisms, an easy deployment, and its applicability to heterogeneous environments. The interfaces allow SAQUE to communicate with the following components:
- Session or application protocol or mechanism improving the control, support and quality level of multi-user sessions;
- Connectivity control protocol or mechanism allowing the adjustment of sessions independently of the underlying transport connections;
- Resource allocation controller protocol or mechanism supporting the dynamic management of network resources;
- Mobility protocol or mechanism giving support to mobility operations.

These components will be explained later in somewhat more detail.

Besides the above, the SAQUE mechanism operates in an environment which provides the following:
- The sender of a multi-user session defines the requirements and the priorities of each flow, by using for instance the *Session Description Protocol* (SDP) (see M. Handley, V. Jacobson and C. Perkins, "SDP: Session Description Protocol", IETF, Internet Draft, January 2006);
- Each receiver gets from the sender by any off-line or on-line mean the session description of the available sessions;
- Each receiver sends the description of the sessions it wants to join to an agent in the access network to which the receiver is connected at the time of the session setup;
- The network agent defines a session object (which is a definition of the session and its relevant parameters) of the service requested by the user (wired or mobile), which is used to perform the session adaptation. The session object contains information about the priority of each flow and/or the current bandwidth capacity.

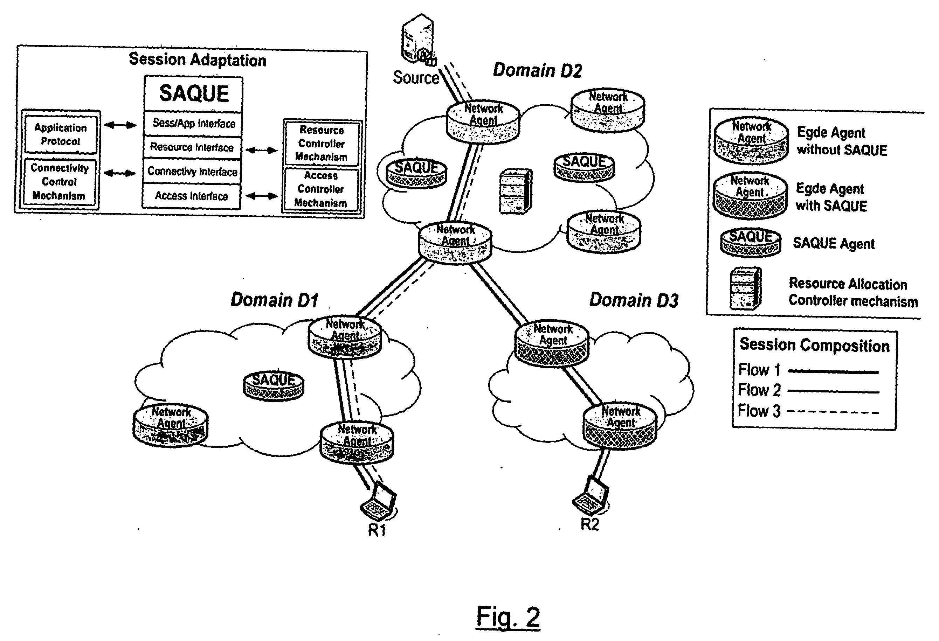

The SAQUE agent can be configured to perform session adaptation between domains, inside a domain and also can be associated to a set of network agents inside or between domains. Figure 2 presents an example of SAQUE location in a generic scenario, where in *Domain 1* there is one SAQUE agent responsible to control the session adaptation in the domain. In *Domain 2*, each SAQUE agent is configured to perform session adaptation for a set of network agents. Finally, in *Domain 3*, the SAQUE agents are placed, at the edges, together with the network agents. The use of SAQUE interfaces allows an easy interaction with external protocols or mechanisms, supporting a straightforward deployment in heterogeneous environments as will be explained in the following.

In order to perform the session adaptation, a SAQUE agent (or an external session or application protocol or mechanism) maintains per-session and per-flow state about the current sessions in its segment (including the IP address of the upstream and/or downstream agent, the importance, bit rate and operational status of each flow of a session). The information about the operational status of a dropped flow can be kept by all agents along the session path or only by the first agent that dropped the flow from the data plane (in this case the control information about the removed flow can be released from the control plane of the other agents). When a stateless SAQUE is activated, it interacts with the session/application protocol/mechanism in order to exchange control information about the current sessions and flows of a session (e.g. operation status, network service class, importance, audience size and the cost of each session or flow). The operational status of a flow can be *sleeping* (dropped from the data plane) or *awake* (added to the data plane), where the sleeping state means that a flow is asleep due to the unavailability of network resources and the awake state means that there are available network resources for a flow.

Furthermore, the interoperation between SAQUE agents can be done by signalling messages (by means of dedicated SAQUE messages which the SAQUE agents are able to generate, transmit, receive, and interpret, or by the use of signalling messages supported by an external session/application protocol/mechanism). The information carried by the messages, for instance the session object, can be used to inform the upstream or downstream agent about the flows that must be put in the sleeping state or in the awaken state, avoiding the upstream and/or downstream waste of network resources.

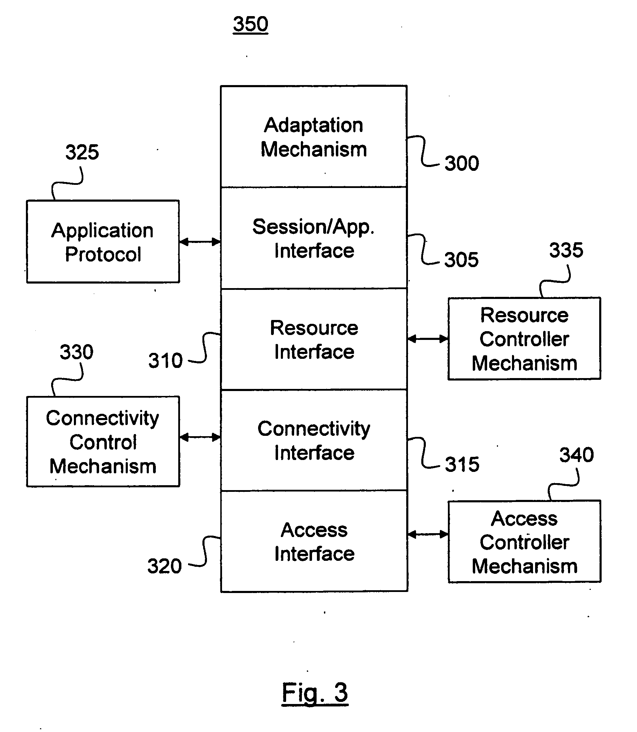

In Fig. 3 there is schematically illustrated a SAQUE agent 350 with its components which will be described in the following. The major components are the adaptation mechanism 300 and several interfaces which will now be explained.
• Interfaces:
   o Session/application interface 305: Interface used by an external protocol/mechanism 325 to request the SAQUE adaptation process to act and to send control information (e.g. the session object) about the flow(s) of a session or sessions to be put asleep or awaked (e.g. a session-aware QoS adaptation mechanism triggers SAQUE to readjust the session to the current network condition). This interface can also be configured to activate a QoS mapping scheme in order to request the reallocation of flows or sessions into another network class of service. When the SAQUE agent finishes its job, it uses this same interface to send a response to a requester;
   o Connectivity interface 315: This interface is used to request a distribution channel, to which an awaked flow will be associated in a domain or between domains, to a protocol/connectivity control mechanism 330. Furthermore, the SAQUE agent uses this interface to send information about which distribution channel must be removed, since the flow was put in the sleeping state;
   o Resource interface 310: In order to avoid the waste of network resources, SAQUE uses this interface to communicate which flows of a session are in the sleeping state to a resource allocation controller protocol or mechanism 335. Moreover, the SAQUE agent uses this interface to ask for network resources associated with a class of service to be used by the awaked flows of a session. This interface is also used to receive a response about the status of the request (e.g. accepted or rejected), to receive information about the current state of the network (e.g. the classes of service affected in congestion situations) and to request the adjustment of network service classes;
   o Access interface 320: This interface is used by the SAQUE agent to inform a mobility management protocol/mechanism or an access controller mechanism 340 about the asleep or awaked flows of a session in order to give support for mobility operations. This interface is also used to trigger a protocol/mechanism 340 in order to inform the end-host about the quality level of his/her session or to inform the users application about the flows of a session that must be joined or left (e.g.
   by using a standard protocol, such as the Session Initiation Protocol (SIP, see RFC 3261));
• Adaptation mechanism 300: the session adaptation mechanism has as input the session object and the current network conditions (e.g. available bandwidth for each network service class). Afterwards, the input information is used to drop or add flows of sessions as well as to request the adjustment of the network service classes or the remapping or flows or sessions into another class of service.

Based on the above interfaces, the SAQUE agent can receive several different triggers from different mechanisms, such as from a resource controller, due to the lack of resources during session setup or due to the reduction of resources during congestion. The SAQUE mechanism can also receive a trigger from another SAQUE agent or from a QoS mapping mechanism. After being triggered, the SAQUE mechanism starts by identifying the sessions that need to be re-adjusted. This can be done based on policies such as:
- Always adjust sessions with lowest audience size
- Always adjust sessions with lowest cost
- Always adjust first video sessions and then audio session

The policy configuration can be done statically, by the service provider according to its business model or to some agreement with its neighbours, or dynamically, by an external trigger such as a neighbour SAQUE agent.

After the selection of a set of sessions and the correspondent network classes, the SAQUE mechanism adjusts the quality of such session e.g. by:
- Requesting the remapping of some of all flows of the session to service classes (if a mapping mechanism available)
- Requesting the re-adjustment of the resources of the network class (if an allocation mechanism available)
- Reducing or increasing the session quality in the current network class by dropping/inserting flows.

For the purpose of remapping the SAQUE agent may communicate with a mapping mechanism, such as for example with a mechanism as described in the European Patent Application titled method and aparatus for quality of service mapping filed in the name of the same applicant and at the same day as the present application. Details of such a mapping mechanism are described in this parallel application which is incorporated herein by reference.

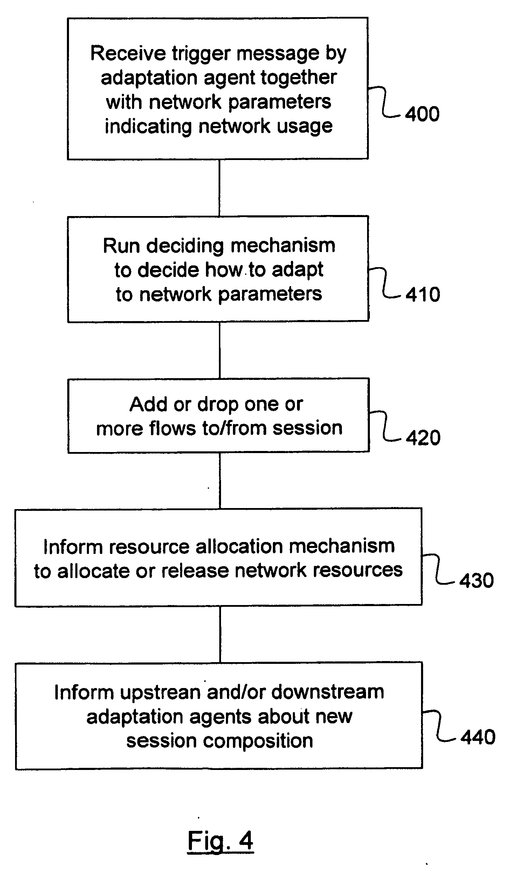

An operation of an adaptation mechanism using a plurality of adaptation agents (or SAQUE agents) will now be described in connection with the flowchart shown in Fig. 4.
In operation 400 a SAQUE agent (adaptation agent) receives a trigger message together with network parameters indicating the network usage. These parameters may e.g. originate from a resource allocation controller which monitors the network usage, and they may be indicative about free and available resources, or they may e.g. be indicative of a congestion in the network.

In response the SAQUE agent in operation 410 runs a deciding mechanism to decide how to adapt to the network parameters. This deciding mechanism may e.g. be the mechanism 300 shown in Fig. 3.

The result of the deciding mechanism may be e.g. to add a flow to the session or to drop a flow from it (operation 420). In operation 430 the SAQUE agent then informs the resource allocation mechanism provided in the network about the new composition of the flow so that this mechanism may allocate or release resources accordingly.

In operation 440 the SAQUE agent then informs upstream and/or downstream agents along the path of the session about the new session composition. The thus informed SAQUE agents may use this as a trigger message to perform themselves an adding or dropping of the flow of the session and to then again inform any (possibly other) resource allocation mechanism in their domain about the new session composition. Again the SAQUE agent may then pass the information about the new session composition on into upstream and/or downstream direction, depending on its location in the session path. In this manner the information about the added or dropped flow is forwarded to all SAQUE agents along the session path from the receiver to the source, and in this manner the session is adapted throughout the network.

According to one embodiment a SAQUE agent receiving an information message from an upstream or downstream agent about a new session composition considers this to be a trigger message to run itself a session adaptation mechanism by adding or dropping a flow, as was done in the agent from which the message was received.

The deciding mechanism may, however, employ some intelligence with respect to the question whether indeed the flow should be added or dropped in the network nodes for which this agent is responsible. E.g. the node for which the SAQUE agent is responsible might be a node which is a branching node where the session branches onto downstream direction and one of the branches still uses the flow. In this case the SAQUE agent may decide to keep the flow and also not to forward any further triggering message into the upstream direction.

According to one embodiment the deciding mechanism does not decide to add or drop a flow, but rather to remap one or more flows to a different service class. In this case a quality of service mapping mechanism may be informed about the decision instead of a resource allocation mechanism.

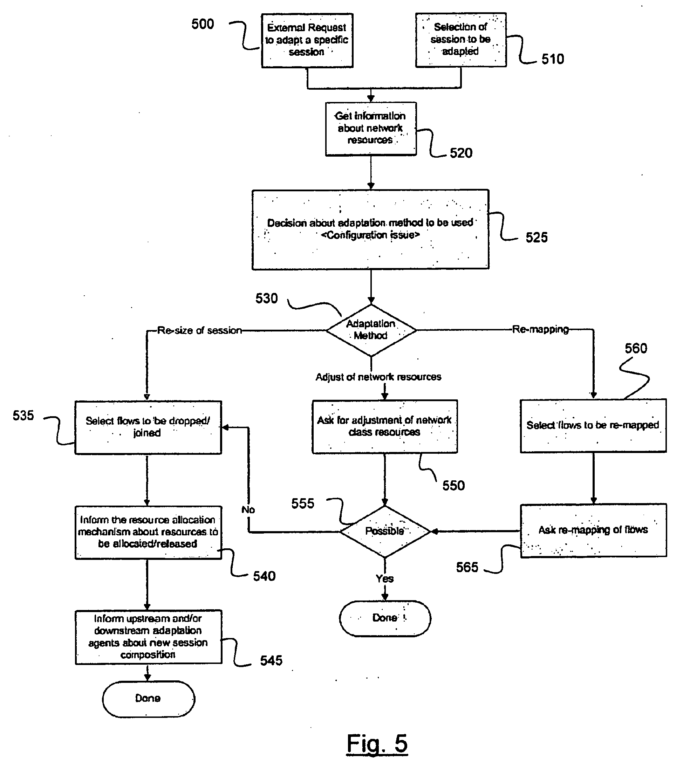

According to a further embodiment the deciding mechanism does not decide to add/drop a flow or to remap flows but rather decides to carry out an adjustment of network class resources. In one embodiment, the deciding mechanism has three options of adapting a session, namely resizing (add/drop a flow), re-mapping flows into different service classes, and adjustment of network class resources. The deciding mechanism may then choose one or more of them according to the circumstances, and they are then executed, possibly in a possibly in a given priority or order. This leads to an embodiment which will now be explained in connection with the flowchart in Fig. 5.

The procedure starts by operation 500 triggering the session adaptation, possibly together with the selection of the session among a plurality ones (510). In operation 520 the procedure gets information about network resources, and then the deciding mechanism in operation 525 decides which adaptation method 530 to use. The decision may be based on the parameters like network resources, information about available resources in different classes, and further based on some decision scheme which uses these kind of parameters and which may be pre-configured. Additionally or alternatively the way chosen to adapt the session may be based on the request or trigger, e.g. if the trigger comes from a mapping mechanism the operation may then be a re-mapping.

In case of the option which was chosen being the adding/dropping of flows, in operation 535 it is chosen which flows should be added or dropped. This decision might e.g. be based on the priority assigned to the flows.

In operation 540 the resource allocation mechanism is then informed to trigger the allocation or release of the corresponding resources. In operation 545 the upstream and/or downstream agents are informed about the new session composition.

If the deciding mechanism chooses to proceed with the adjustment of network resources in operation 525, this has the effect that the adaptation method 530 to be executed consists in operation 550 of asking (e.g. a corresponding controlling mechanism) for an adjustment of network class resources. If this is not possible (checkbox 555) the mechanism may proceed with the other adaptation mechanism of re-sizing the session by adding/dropping flows (operation 535).

If the adaptation mechanism chosen in operation 525 is a re-mapping the mechanism proceeds with operation 560 to select the flows to be re-mapped and then a mapping mechanism may in operation 565 be asked to carry out the re-mapping. If this is not successful the mechanism may proceed with the adaptation by re-sizing the session (operation 535).

As shown in Fig. 5, one (or more) adaptation mechanisms may be chosen, possibly in accordance with some priority or order which allows for a backup mechanism if the one which was initially chosen fails.

According to one embodiment the SAQUE mechanism decides about which flow to add or to drop based on the priorities assigned to the flows, e.g. when establishing the session.

The decision about which operation(s) are performed by a SAQUE agent in one embodiment depends on its local configuration and/or external triggers. Furthermore, in what concern the adjustment of the number of flows of a session, the SAQUE agent's adaptation mechanism has two basic methods of working, namely to drop/sleep or add/awake flows of multi-user sessions, and it further is capable of executing a decision process to select the flows that will be put in sleeping or awake state as follows.

At first the operational methods to adapt the session to the current network condition will be explained, namely the reduction or the increase of the number of flows of a session.

Reduction of the number of flows of a session
This operation reduces the session quality level by dropping low priority flows of a session. In this case the SAQUE agent is triggered, for instance by an external application protocol (through their interfaces), to reduce the number of flows of a session (put in sleeping state) in order adapt the session to the current network condition and to avoid upstream and/or downstream waste of network resources by a flow or low priority flows of a session that are/will be dropped by an agent (e.g. interacting with a resource allocation mechanism which indicates to the SAQUE agent that the number of flows should be reduced). SAQUE may in one embodiment e.g. be triggered to reduce the number of flows of a session by an external session/application protocol/mechanism or by a resource allocation controller protocol/mechanism. For instance, a QoS mapping mechanism may trigger the SAQUE agent when the available capacity of a network service class is not enough to assure a low packet loss for flows of a session. Furthermore, the SAQUE agent may in one embodiment also be configured, through its interfaces, to inform the receivers about the quality level of his/her session, or to inform the source that there are no interested receivers in its session or in the flows of its session, or to signal a mobility management schema or mechanism to update its state, when flows of a session are dropped.

Re-establishment (increase) of the number of flows of a session
This operation aims to assure the full quality of the session by adding low priority flows to a session. The SAQUE agent is triggered to re-establish the number of flows of a session in order to support the maximum session quality level. The sleeping flows are awake by the SAQUE agent when the network capability becomes available again (e.g. due to the end of other sessions, routing changes, or due to the mobility of receivers to an un-congested network). The SAQUE agent may be triggered to awake flows of a session by an external session/application protocol/mechanism (e.g. receiving a signalling message sent by an external application protocol) or by a resource allocation controller protocol/mechanism (e.g. by an indication about the available bandwidth of a certain network service class that is passed from the Resource Controller to the SAQUE agent through the resource interface 310). The SAQUE agent may also be configured to interact with a connectivity control mechanism to request a distribution channel for each awaked flow, to which a flow will be associated in a domain or between domains, avoiding a discontinuity point between different address realms. Furthermore, if during the re-establishment of flows along the session path, any flow of a session is not supported by an agent (e.g. due unavailability of network resources), the previous operational method or reducing/dropping a flow is requested.

### Decision Process:

The decision about the request to readjust the resources of network service classes as well as the decision about which flows should be reallocated into another class of service (if available) or put in sleeping or awake state may in one embodiment be based on a set of flexible parameters selected by static and/or dynamic configuration. The former can be configured by the service provider according to its business model or to some agreement with its neighbours (e.g. in a situation of network congestion, the SAQUE agent is statically configured to drop flows of sessions with small audience). The dynamic configuration can be done on-demand by an external protocol/mechanism, such as a QoS mapping mechanism (like the one described in the already mentioned application "Method and Apparatus for Quality of Service Mapping") or an application protocol (through their interfaces), or through another SAQUE agent (e.g. by means of a dedicated SAQUE message). In these cases an indication is passed by an interface or by a message to send information, for instance which flows must be put on sleeping or awake state or reallocated to another service class. The dynamic configuration can be performed according to the session media type or cost of the session described by the signalling message or the interface request. Moreover, in a period of network congestion, the SAQUE agent can trigger a resource allocation controller mechanism to readjust the network resources for a class of service in order to assure, for instance, the full bandwidth committed for each flow of a session.

The SAQUE mechanism (which is implemented by a set of SAQUE agents) allows the distribution of multi-user session content to different receivers across heterogeneous environments. Besides, the SAQUE mechanism avoids the upstream or downstream waste of network resources by flow(s) sessions that are (or will be) refused by an agent.

Further embodiments of the SAQUE mechanism will now be described.

The SAQUE mechanism aims to adapt the quality level of multi-user sessions to different receivers across heterogeneous environments. Furthermore, SAQUE aims to improve the usage of network resources, by avoiding the upstream or downstream waste of network resources and state stored by flows not supported in an agent.
In one embodiment the information about the current network resources capability for a service class in a domain or between domains is supported by a resource allocation controller protocol or mechanism. For example in congestion situations, the SAQUE agent is triggered to adapt sessions to the current network conditions, for instance by putting into a sleeping state flow(s) of session(s) mapped to a network class or requesting the reallocation of flow into another service class. When the network resources are available again the SAQUE agent is activated to readjust the quality level of the session, for instance by awakening flows that were previously put in the sleeping state. The SAQUE in one embodiment may also be configured to activate an external QoS mapping mechanism as a way to reallocate the flows of sessions into another network service class in order to avoid the flows blocking. Furthermore, when a flow is put into a sleeping mode or awakened, the SAQUE agent triggers a session or application signalling protocol or mechanism to adjust the quality level of sessions by signalling the upstream and/or downstream agents as a way to remove or re-establish the number of flows of a session. This functionality may e.g. be supported by the SAQUE agents using dedicated SAQUE messages, or the signalling may be done using an application protocol. For instance the SAQUE messages can be included in the message set of any session control protocol that operates between edge routers. The decision about which flow(s) should be put asleep or awaked as well the interaction with a QoS mapping scheme to reallocate flows into another service class or resource allocation controller mechanism to readjust the network resources for a class respectively can be based on a set of flexible parameters configured statically or dynamically. For instance, the decision may be based on the session object transported by the signalling messages, the cost of each session or flow and/or the population size of each flow or type of session.

The SAQUE agents can be stateful or stateless, where in the latter an external session or application protocol or mechanism should maintain per-session and per-flow state about the current sessions in a domain or between domains to which a SAQUE agent is associated. In one embodiment the state needed to perform the session adaptation includes information about the IP address of the upstream and/or downstream SAQUE agent, the number of branch points for the session, the importance (or priority), bit rate, network service class and operational status of each flow (the information about the dropped flow(s), including the operation status, can be kept by all agents or by an external mechanisms to which the agents are associated along the session path, or only by the first agent (or mechanism) that dropped the flow from the data plane). Furthermore, in order to improve the session adaptation performed by the SAQUE agent, according to one embodiment the state which is stored can be enhanced, for instance, by including extra information about the audience size and cost of each session or flows. Thus, when the SAQUE agent is activated, it executes its operations according to the state maintained by an external session/application protocol/mechanism or a SAQUE agent or information described in the signalling messages. In addition, the communication between SAQUE agents can be based on SAQUE messages or signalling messages of an external session/application protocol/mechanism. The signalling messages can inform to the upstream and/or downstream SAQUE agent about the flows that must be put in the sleeping state or in the awakened state as well as the flows reallocated to another class of service (information described in the session object).

In the following explanation the SAQUE mechanism according to one embodiment will be described in somewhat more detail. This embodiment focuses on the explanation of adding/dropping flows of a session. According to one embodiment, however, the SAQUE agent's functionality comprises also to request the reallocation of flows into another service class or to ask the adjustment of network resources for a class. This may be executed by an additional proper signalling between the SAQUE agent and a resource allocation mechanism and a quality of service mapping mechanism through the respective interfaces.

In the following embodiment it is assumed that an external session/application protocol or mechanism is responsible for maintaining per-session and per-flow state (including the operational status of the flows along the session path), which is used by the SAQUE mechanism (the SAQUE agents). There are a plurality of SAQUE agents as shown e.g. in Fig. 2 along the path from the source to the receiver, like the network agents from the source to receiver R2 which all include a SAQUE agent. In this embodiment the interoperability between SAQUE agents is performed by the use of signalling messages of this external session/application protocol or mechanism. Depending on the location of a SAQUE agent along the session path and depending on the moment that it is triggered, the SAQUE agents's behaviour can be as follows:

At first the operation of the reduction of the number of flows of a session will be explained for different locations i) to iii) of the SAQUE agent and for different times of the operation being requested.
i) Location of the SAQUE agent: The agent responsible to control the session adaptation at the access point of the session
   ■ During session setup: When the SAQUE agent is triggered by an external session/application protocol/mechanism (which means that no network resources were reserved by the current agent for the flow(s)), it selects the flow(s) of the session that must be dropped (e.g. based on the current bandwidth capability and flows priority provided by the session object), the SAQUE agent triggers the external session/application protocol/mechanism to update its state about the asleep flow(s) of the session (put in sleeping state) and to signal the upstream agents in order to remove state about the referred flows (to put them into sleeping mode), for instance, by sending a signalling message.
   ■ After session setup: the SAQUE agent can be triggered by an external session/application protocol/mechanism, for instance by receiving a signalling message informing the flows that must be put in the sleeping state (e.g. this situation occurs after receiving information about the flows asleep from upstream agents). Moreover, the SAQUE agent can be activated by a resource allocation controller protocol/mechanism reporting an unavailability of network resources for a service class (e.g. due to congestion situations). In the latter situation, the SAQUE agent verifies which flows should be put on the sleeping state (e.g. based on its local adaptation decisions, for instance, drops flows with small audiences). In both cases, the SAQUE agent triggers the resource allocation controller protocol/mechanism to remove state for the asleep flows, and signals the connectivity control protocol/mechanism, responsible for maintaining the connectivity between domains with different transport technologies, to delete its state about the flows. The SAQUE agent may also trigger a mobility management protocol/mechanism to update its state about the number of flows of a session. Moreover, the interaction with the session/application occurs in the same way as explained before.
ii) Location of the SAQUE agent: An agent that has a multicast or unicast branch point for the session
   ■ During the session setup: When the SAQUE agent is triggered by an external session/application protocol/mechanism informing the flows that must be put in the sleeping state (e.g. receiving the session object), the SAQUE agent verifies the flow(s) of sessions that must be dropped and informs the requester to update its state with information about the asleep flow(s) towards a downstream SAQUE agent;
   ■ After session setup: When the SAQUE agent is triggered by a session/application or resource allocation controller protocol/mechanism, it checks which flows should be put in the sleeping state towards a downstream agent. After that, the SAQUE agent triggers the resource allocation controller protocol/mechanism to remove downstream state for the asleep flows of a session in the domain or between domains, signals the connectivity control protocol/mechanism to release the flows towards a downstream agent, and triggers a session/application protocol/mechanism to update its state and informs that it is not needed to send upstream signalling message, because the flows are being used by other receivers (if this is the case, in other words if the flow is still used in another branch in downstream direction). If SAQUE is triggered by a resource allocation controller protocol/mechanism, it also triggers the session/application protocol/mechanism for signalling downstream agents to update state about the asleep flows.
iii) Location of the SAQUE agent: An agent without a branch point for the session and which is in the path between the access-agent and the agent that has a branch point for the session.
   ■ During the session setup: When the SAQUE agent is triggered by an external session/application protocol/mechanism and receives the information about flow(s) being refused by the current agent, the SAQUE agent signals the external session/application protocol/mechanism to update its state with information about the asleep flow(s) of the session and to signal the previous upstream agents in order to remove state about the flow(s) put in the sleeping state by the current agent.
   ■ After session setup: When the SAQUE agent is triggered by a session/application (e.g. by receiving an upstream or downstream signalling message) or resource allocation controller protocol/mechanism, it checks which flows should be put in the sleeping state. After that, the SAQUE agent triggers the resource allocation controller protocol/mechanism to remove state for the asleep flows, and signals the connectivity control protocol/mechanism to delete its state about the flows. Finally, the SAQUE agent triggers the session/application protocol/mechanism to update its state about the dropped flows and to send a signalling message towards a downstream and/or upstream agent to update state about the asleep flows of the session.

Now the operation of the re-establishment of the number of flows of a session will be described for different locations i) to iii) of a SAQUE agent.
i) Location of the SAQUE agent: an agent responsible to control the session adaptation at the access point of the session
   ■ The SAQUE agent may be triggered by an external session/application protocol/mechanism (e.g. upon receiving a signalling message with information about the flows awaked by upstream SAQUE agents) or a resource allocation controller protocol/mechanism (e.g. upon receiving indication about that a network service class being available again) to adjust the session by adding flows of a session or sessions. After that, it signals the connectivity control protocol/mechanism to control distribution channels for each flow and triggers the resource allocation controller protocol/mechanism asking for network resources for the awaked flow(s) of a session (e.g. reserve network resources on the wireless link). Moreover, the SAQUE agent triggers the session/application protocol/mechanism to update state about the session as well as the mobility management protocol/mechanism to update its state about the number of flows of a session. The SAQUE agent may also be configured to trigger a protocol/mechanism to inform the receivers' application, for instance, about the awaked flows to be joined or the actual quality level of the session. Furthermore, the SAQUE agent may interact with a session/application protocol/mechanism to request resources for the awaked flows to the upstream agents (if this agent put the flows in sleeping state during the session setup).
ii) Location of the SAQUE agent: an agent that has a multicast or unicast branch point for the session
   ■ The SAQUE agent may be triggered by an external session/application protocol/mechanism or a resource allocation controller protocol/mechanism to readjust the number of flow(s) of session(s), for instance upon receiving indication that there are available resources for network class(es). Based on this information, the SAQUE agent verifies which flows should be put in the awake state and requests distribution channels for each flow. After that, the SAQUE agent requests to the resource allocation controller protocol/mechanism the network resources for the flow(s). Finally, the SAQUE agent triggers the session/application to add state to the flows that are awake (e.g. adding a new branch point for the session) and to signal downstream agents to allocate network resources for the flow(s) a session.
iii) Location of the SAQUE agent: an agent without a branch point for the session and which is in the path between the access-agent and the agent that has a branch point for the session.
   ■ The SAQUE agent may be triggered by a session/application (e.g. upon receiving a downstream or upstream signalling message) or a resource allocation controller protocol/mechanism. Then, it checks which flows should be put in the awake state. After that, the SAQUE agent interacts with the connectivity control protocol/mechanism asking for distribution channel(s) for the flow(s) of a session and triggers the resource allocation protocol/mechanism to request network resources for each flow. Furthermore, the SAQUE agent triggers the session/application protocol/mechanism to update its state and to signal downstream and/or upstream agents as a way to request resources along the session path.

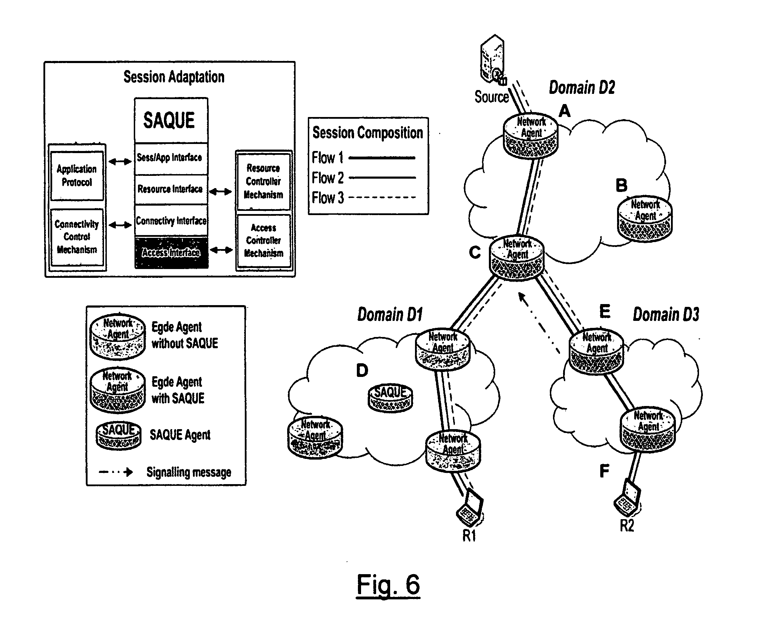

Figure 6 schematically illustrates an example of the SAQUE mechanism to perform session adaptation by dropping flows of a session in a generic scenario composed of three domains, where two receivers (R1 and R2) are interested in all flows of a session (S1) composed of three flows. Each flow of S1 is defined, by the source, according to its importance, such as e. g. in case of a MPEG-4 multi-flow session. In this embodiment the following mechanisms are provided:
- A session control mechanism that keeps per-session and per-flow state (including the operational status of the flows along the session path). Moreover, the interoperability between SAQUE agents is done by using the signalling messages supported by this mechanism;
- A QoS mapping mechanism that is responsible to request a SAQUE agent during the session setup and to furnish the session object;
- A connectivity control mechanism responsible to control the connectivity between domains with different address realms;
- A resource allocation controller mechanism, which maintains information about the network service classes, including their current bandwidth capacity, in a domain and between domains. Furthermore, this mechanism is responsible to request a SAQUE agent when the bandwidth capacity of the services class is available again;
- The existence of a mobility management mechanism.

The above mechanisms are provided by suitable network implementations or entities in the network, and the SAQUE mechanism which is implemented by the SAQUE agents can communicate and interact with these mechanisms through the interfaces which were already described in connection with Fig. 3.

In the example shown in Figure 6, the SAQUE agent is triggered e.g. by the QoS mapping mechanism in network node E during session setup, e.g. because there are no available network resources to accommodate all flows of S1 into the selected class of service. Based on the local configuration and information about the session object provided by the requester, including the available network resources in Domain D3, the SAQUE agent (which in this embodiment is a module of network node E) runs its adaptation mechanism and decides to drop the less priority flows, namely Flow 3 (F3), of S1 and triggers the session control mechanism to update the operation status of F3 (put in sleeping state) and to send a signalling message to the upstream SAQUE agent (shown by an arrow in Fig. 3) in order to remove state from the data plane about the dropped flow, thereby avoiding the upstream waste of network resources.

Upon receiving the signalling message, the SAQUE agent is triggered in network node C which comprises as a module a SAQUE agent. The SAQUE agent of node C interacts with the resource allocation controller mechanism to release network resources for F3 and signals the connectivity control scheme to update its state about the downstream dropped flow. Finally, the SAQUE agent interacts with the session control mechanism to change the operation status of F3 and since this agent has another branch point for session S1, the SAQUE agent provides the information that it is not needed to send an upstream signalling message (because in another downstream branch path F3 is still needed).

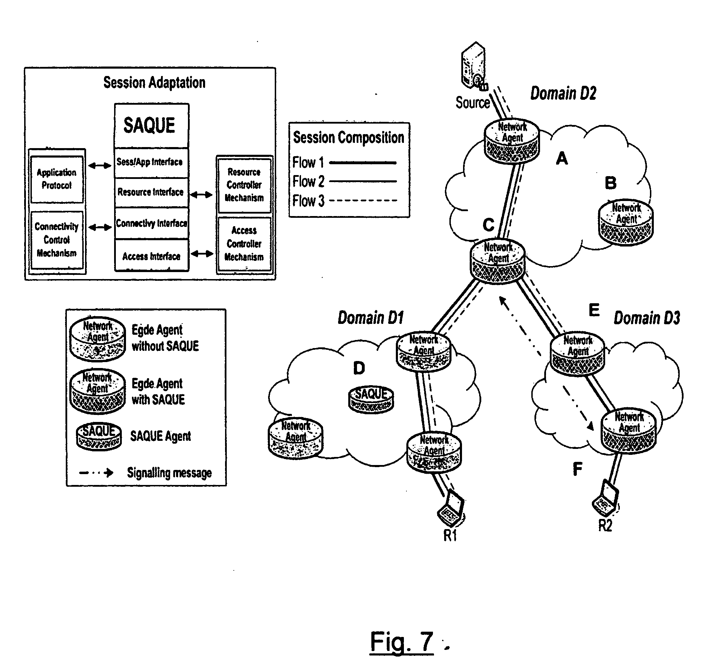

Figure 7 schematically illustrates an example of the SAQUE mechanism to perform session adaptation by adding flows of a session in a generic scenario composed of three domains, where two receivers are interested in all flows of a session (S1). The embodiment shown in Figure 7 shows the SAQUE mechanism operations to improve the quality level of S1, by awaking flow F3 when the network resources are available again. In this embodiment the SAQUE mechanism implemented in node E is triggered by the resource allocation controller mechanism (not explicitly shown). Network node E which comprises a module acting as SAQUE agent, is informed by the resource allocation controller mechanism that the bandwidth capacity for the class *X* (generic service class to which S1 was mapped) between the agents E and F is available again. After that, the SAQUE agent implemented in node E checks the state stored by the session control mechanism that is associated with network node E and verifies that F3 of S1 is sleeping. Then, based on its local configuration (possibly by referring to its adaptation mechanism) the SAQUE agent decides to awake F3 and triggers the connectivity control and the resource allocation controller mechanism to allocate a distribution channel and network resources to F3 in class X respectively. When these tasks are concluded, the latter triggers the SAQUE agent of node E to inform it about the status of the operation (accepted or rejected) and the former informs the SAQUE agent about the distribution channel identifier allocated for the flow between domains D2 and D3. Based on this information, the SAQUE agent interacts with the session control schema as a way to update state for F3. After that, the SAQUE agent uses the signalling messages of the session control mechanism to awake F3 in network nodes C and F.

In nodes C and F, the interaction between the SAQUE agents implemented in these nodes, the session control, the connectivity control and the resource allocation controller mechanisms occurs in the same way as explained before. However, node C does not trigger the session control mechanism to send an upstream signalling message, because the F3 is already active in the upstream path, since node C is a branch point for that session. As for node F, since the node F is an access node, the SAQUE agent may trigger the mobility management to activate its state for F3 and SIP may be triggered to inform the receiver application about the distribution channel used for F3 in the multicast domain D3 (when needed). This way, the application can join the correct multicast channel by using the Internet Group Management Protocol (IGMPv3, see RFC 3376) or Multicast Listener Discovery Protocol (MLDv2, see RFC 3810).

In the foregoing embodiments the SAQUE agents have been implemented as modules of the respective network nodes. However, the SAQUE mechanism may operate in the same manner if the SAQUE agents are distinct entities separate from the network nodes through which a session passes, like e.g. shown in domain D1 of Figures 6 and 7. In such a case a SAQUE agent may be responsible for a plurality of network nodes and may accordingly drop or add flows to the sessions and from the sessions it is responsible for. The signalling between the SAQUE agents may be carried out in the same manner as described, by using a session/application protocol or mechanism, or by using dedicated messages between the SAQUE agents.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a session adaptation as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the session adaptation mapping mechanisms as described before.

## Claims

1. A method for adapting a session (300) between a source and a receiver through a network, whereas the session originating from a source is composed of a plurality of flows which together form the session, whereas the receiver may receive all or a subset of the flows of the session, whereas said session passes through a plurality of network nodes from said source to said receiver, whereas a plurality of adaptation agents are provided in said network, each adaptation agent being capable of running an adaptation mechanism by adding a flow to or dropping a flow from said session (420), each adaptation agent being responsible for one or more network nodes along the path from the source to said receiver, said method comprising the steps of :
receiving by one of said adaptation agents network parameters indicating the network usage (400);
running a deciding mechanism to decide by said adaptation agent how to adapt said session to said network usage (410) ;
add or drop one or more flows to or from said session (420);
inform a resource allocation mechanism provided in said network to allocate or release network resources in accordance with said added or dropped flow (430);
inform upstream and/or downstream adaptation agents about the new session composition (440).

2. The method of claim 1, wherein
instead of or in addition to said adding or dropping of flows said deciding mechanism decides to reallocate one or more flows of said session to a different service class than the present one; and
instead of said resource allocation mechanism a quality of service mapping mechanism is informed about the decision of said deciding mechanism.

3. The method of claim 1 or 2, wherein
instead of or in addition to said adding or dropping of flows said deciding mechanism decides to request said resource allocation mechanism to readjust resources for a class of service.

4. The method of one of claims 1 to 3, wherein
each flow has assigned to it a priority, and said deciding mechanism decides on said adding or dropping of flows based on said priority of said flows.

5. The method of one of the preceding claims, wherein
said network usage information contains information about whether sufficient network resources are available or not, and
if the network resources are not sufficient the deciding mechanism decides to drop one or more flows, and
if the network resources are sufficient, it is decided to add one or more flows.

6. The method of one of the preceding claims, comprising the steps of :
maintaining state of the flows of said session to indicate whether they are awake or asleep; and whereas
adding a flow to session corresponds to putting it into an awake state, and
dropping a flow to session corresponds to putting it into an sleeping state;
each of said states being reversible.

7. The method of one of the preceding claims, wherein there are a plurality of sessions, and said deciding mechanism comprises selecting one or more of the sessions to be adapted among said plurality of sessions, whereas said selection is based on one or more of the following criteria:
selecting the sessions with the lowest audience size for adaptation;
selecting the sessions with the lowest cost for adaptation;
selecting preferably video sessions over audio sessions for adaptation.

8. The method of one of the preceding claims, wherein
an adaptation agent receiving information from another adaptation agent about a new session composition decides based on the location of said adaptation agent in the path of said session from said receiver to said source and based on whether said adaptation agent has a branch point for said session as to whether it adds or drops said flow and as to whether this information is to be forwarded further upstream or downstream.

9. An agent for adapting a session (300) between a source and a receiver through a network, whereas the session originating from a source is composed of a plurality of flows which together form the session, whereas said session passes through a plurality of network nodes from said source to said receiver, said adaptation agent being one of a plurality of adaptation agents which are provided in said network, each adaptation agent being capable of running an adaptation mechanism by adding a flow to or dropping a flow from said session (420), each adaptation agent being responsible for one or more network nodes along the path from the source to said receiver, said adaptation agent comprising:
an interface for receiving network parameters indicating the network usage (400);
a deciding module to decide how to adapt said session to said network usage (410);
an add/drop module for adding or dropping one or more flows to or from said session (420);
an resource information module for informing a resource allocation mechanism provided in said network to allocate or release network resources in accordance with said added or dropped flow (430);
an upstream/downstream information module for informing upstream and/or downstream adaptation agents about the new session composition (440).

10. The agent of claim 9, wherein
instead of or in addition to said adding or dropping of flows said deciding module decides to reallocate one or more flows of said session to a different service class than the present one; and
instead of said resource allocation mechanism a quality of service mapping mechanism is informed about the decision of said deciding mechanism.

11. The agent of claim 9 or 10, wherein
instead of or in addition to said adding or dropping of flows said deciding module decides to request said resource allocation mechanism to readjust resources for a class of service.

12. The agent of one of claims 9 to 11, wherein
each flow has assigned to it a priority, and said deciding mechanism decides on said adding or dropping of flows based on said priority of said flows.

13. The agent of one of claims 9 to 12, wherein
said network usage information contains information about whether sufficient network resources are available or not, and
if the network resources are not sufficient the deciding module decides to drop one or more flows, and
if the network resources are sufficient, it is decided to add one or more flows.

14. The agent of one of claims 9 to 13, comprising:
a maintaining module for maintaining state of the flows of said session to indicate whether they are awake or asleep; and whereas
adding a flow to session corresponds to putting it into an awake state, and
dropping a flow to session corresponds to putting it into an sleeping state;
each of said states being reversible.

15. The agent of one of claims 9 to 14, wherein there are a plurality of sessions, and said deciding module carried out a selection one or more of the sessions to be adapted among said plurality of sessions, whereas said selection is based on one or more of the following criteria:
selecting the sessions with the lowest audience size for adaptation;
selecting the sessions with the lowest cost for adaptation;
selecting perferably video sessions over audio sessions for adaptation.

16. The agent of one of the preceding claims, wherein
said deceiding module decides based on the location of said adaptation agent in the path of said session from said receiver to said source and based on whether said adaptation agent has a branch point for said session as to whether it adds or drops said flow and as to whether this information is to be forwarded further upstream or downstream if the adaptation agent received information about the new session composition from another adaptation agent.

17. A computer program comprising computer executable code for enabling a computer to carry out all the steps of a method according to one of claims 1 to 8.

## Patentansprüche

1. Verfahren zum Anpassen einer Session (300) zwischen einer Quelle und einem Empfänger durch ein Netzwerk, wobei die Session aus einer Quelle entspringt und aus einer Mehrzahl von Flüssen (flows) zusammengesetzt ist, die gemeinsam die Session bilden, wobei der Empfänger alle oder eine Untermenge der Flüsse der Session empfangen kann, wobei die Session eine Mehrzahl von Netzwerkknoten von der Quelle zu dem Empfänger passiert, wobei eine Mehrzahl von Anpassungsagenten in dem Netzwerk vorgesehen sind, wobei jeder Anpassungsagent fähig ist, einen Anpassungsmechanismus ablaufen zu lassen, in dem ein Fluss der Session (420) hinzugefügt oder aus ihr entfernt wird, wobei jeder Anpassungsagent für einen oder mehrere Netzwerkknoten entlang des Pfads von der Quelle zu dem Empfänger verantwortlich ist, wobei das Verfahren folgende Schritte aufweist:
Empfangen von Netzwerkparametern, die die Netzwerkverwendung (400) angeben, durch einen der Anpassungsagenten;
Ablaufen lassen eines Entscheidungsmechanismus, um durch den Anpassungsagenten zu entscheiden, wie die Session an die Netzwerkverwendung (410) angepasst werden kann;
Hinzufügen oder Entfernen von einem oder mehreren Flüssen von der Session (420);
Informieren eines Betriebsmittelzuweisungsmechanismus, der in dem Netzwerk vorgesehen ist, um in Übereinstimmung mit dem hinzugefügten oder entfernten Fluss Netzwerkbetriebsmittel zuzuweisen oder freizugeben (430);
Informieren von Upstream- und/oder Downstream-Anpassungsagenten über die neue Session-Zusammensetzung (440).

2. Verfahren nach Anspruch 1, wobei anstelle oder zusätzlich zu dem Hinzufügen oder Entfernen von Flüssen der Entscheidungsmechanismus entscheidet, einen oder mehrere Flüsse der Session zu einer Serviceklasse unterschiedlich der gegenwärtigen zuzuweisen; und
anstelle des Betriebsmittel-Zuweisungsmechanismus wird ein Servicequalitäts-Abbildungsmechanismus über die Entscheidung des Entscheidungsmechnismus informiert.

3. Verfahren nach Anspruch 1 oder 2, wobei
anstelle oder zusätzlich zu dem Hinzufügen oder Entfernen von Flüssen der Entscheidungsmechanismus entscheidet, den Betriebsmittel-Zuweisungsmechanismus aufzufordern, Betriebsmittel für eine Serviceklasse neu anzupassen.

4. Verfahren nach einem der Ansprüche 1 bis 3, wobei
jeder Fluss eine ihm zugewiesene Priorität hat und der Entscheidungsmechanismus über das Hinzufügen oder Entfernen von Flüssen basierend auf der Priorität der Flüsse entscheidet.

5. Verfahren nach einem der vorhergehenden Ansprüche, wobei
die Netzwerkverwendungsinformation Informationen darüber enthält, ob ausreichende Netzwerkbetriebsmittel verfügbar sind oder nicht, und
falls die Netzwerkbetriebsmittel nicht ausreichend sind, der Entscheidungsmechanismus entscheidet, einen oder mehrere Flüsse zu entfernen, und
falls die Netzwerkbetriebsmittel ausreichend sind, wird entschieden, einen oder mehrere Flüsse hinzuzufügen.

6. Verfahren nach einem der vorhergehenden Ansprüche, aufweisend folgende Schritte:
Aufrechterhalten des Status der Flüsse der Session, um anzugeben, ob sie wach oder schlafend sind; und wobei
das Hinzufügen eines Flusses zu einer Session dem entspricht, ihn in einen Wachstatus zu versetzen, und
Streichen eines Flusses von einer Session dem entspricht, ihn in einen Schlafstatus zu versetzen;
wobei jeder der Zustände reversibel ist.

7. Verfahren nach einem der vorhergehenden Ansprüche, wobei es eine Mehrzahl von Sessions gibt und der Entscheidungsmechanismus umfasst:
Auswählen von einer oder mehrerer der Sessions, die unter der Mehrzahl von Sessions angepasst werden sollen, wobei die Auswahl auf einem oder mehreren der folgenden Kriterien basiert:
Auswählen der Sessions mit der geringsten Zuhörerzahl für die Anpassung;
Auswählen der Sessions mit den geringsten Kosten für die Anpassung;
vorzugsweises Auswählen von Videosessions statt Audiosessions für die Anpassung.

8. Verfahren nach einem der vorherigen Ansprüche, wobei
ein Anpassungsagent Informationen von einem anderen Anpassungsagenten über eine neue Session-Zusammensetzung erhält und basierend auf dem Ort des Anpassungsagenten in dem Pfad der Session von dem Empfänger zu der Quelle und basierend darauf, ob der Anpassungsagent einen Verzweigungspunkt für die Session aufweist, entscheidet, ob der Fluss hinzugefügt oder gestrichen wird und ob diese Informationen Upstream oder Downstream weitergeleitet werden.

9. Agent zur Anpassung einer Session (300) zwischen einer Quelle und einem Empfänger über ein Netzwerk, wobei die Session von einer Quelle entspringt und aus einer Mehrzahl von Flüssen zusammengesetzt ist, die zusammen die Session bilden, wobei die Session durch eine Mehrzahl von Netzwerkknoten von der Quelle zu dem Empfänger passiert, wobei der Anpassungsagent einer einer Mehrzahl von Anpassungsagenten ist, die in dem Netzwerk vorgesehen sind, wobei jeder Anpassungsagent fähig ist, einen Anpassungsmechanismus ablaufen zu lassen, indem ein Fluss zu einer Session hinzugefügt oder von einer Session gestrichen wird (420), wobei jeder Anpassungsagent verantwortlich ist für einen oder mehrere Netzwerkknoten entlang des Pfads von der Quelle zu dem Empfänger, wobei der Anpassungsagent aufweist:
ein Interface zum Empfangen von Netzwerkparametern, die die Netzwerkverwendung angeben (400);
ein Entscheidungsmodul zum Entscheiden, wie die Session an die Netzwerkverwendung angepasst wird (410);
ein Hinzufügen-/ Streichen-Modul zum Hinzufügen oder Streichen von einem oder mehreren Flüssen zu oder von der Session (420);
ein Betriebsmittel-Informationsmodul, um einen in dem Netzwerk vorgesehenen Betriebsmittel-Zuweisungsmechanismus zu informieren, Netzwerkbetriebsmittel in Übereinstimmung mit dem hinzugefügten oder gestrichenen Fluss zuzuweisen (430);
ein Upstream-/ Downstream-Informationsmodul, um Upstream- und/oder Downstream-Anpassungsagenten über die neue Session-Zusammensetzung zu informieren (440).

10. Agent nach Anspruch 9, wobei
anstelle von oder zusätzlich zu dem Hinzufügen oder Streichen von Flüssen das Entscheidungsmodul entscheidet, einen oder mehrere Flüsse der Session einer anderen Serviceklasse als der momentanen zuzuweisen; und
anstelle des Betriebsmittel-Zuweisungsmechanismus ein Servicequalitäts-Zuordnungsmechanismus über die Entscheidung des Entscheidungsmechanismus informiert wird.

11. Agent nach Anspruch 9 oder 10, wobei
anstelle von oder zusätzlich zu dem Hinzufügen oder Streichen von Flüssen das Entscheidungsmodul entscheidet, den Betriebsmittel-Zuweisungsmechanismus aufzufordern, Betriebsmittel für eine Serviceklasse neu anzupassen.

12. Agent nach einem der Ansprüche 9 bis 11, wobei
jeder Fluss eine ihm zugewiesene Priorität hat und der Entscheidungsmechanismus über das Hinzufügen oder Entfernen von Flüssen basierend auf der Priorität der Flüsse entscheidet.

13. Agent nach einem der Ansprüche 9 bis 12, wobei
die Netzwerkverwendungsinformation Informationen darüber enthält, ob ausreichende Netzwerkbetriebsmittel verfügbar sind oder nicht, und
falls die Netzwerkbetriebsmittel nicht ausreichend sind, der Entscheidungsmechanismus entscheidet, einen oder mehrere Flüsse zu entfernen, und
falls die Netzwerkbetriebsmittel ausreichend sind, wird entschieden, einen oder mehrere Flüsse hinzuzufügen.

14. Agent nach einem der Ansprüche 9 bis 13, aufweisend:
ein Aufrechterhaltungsmodul zum Aufrechterhalten des Status der Flüsse der Session, um anzugeben, ob sie wach oder schlafend sind; und wobei
das Hinzufügen eines Flusses zu einer Session dem entspricht, ihn in einen Wachstatus zu versetzen, und
Streichen eines Flusses von einer Session dem entspricht, ihn in einen Schlafstatus zu versetzen;
wobei jeder der Zustände reversibel ist.

15. Agent nach einem der Ansprüche 9 bis 14, wobei es eine Mehrzahl von Sessions gibt und das Entscheidungsmodul eine Auswahl von einer oder mehreren der Sessions, die angepasst werden sollen, aus der Mehrzahl von Sessions auswählt, wobei die Auswahl auf einem oder mehreren der folgenden Kriterien basiert:
Auswählen der Sessions mit der geringsten Zuhörerzahl für die Anpassung;
Auswählen der Sessions mit den geringsten Kosten für die Anpassung;
vorzugsweises Auswählen von Videosessions statt Audiosessions für die Anpassung.

16. Agent nach einem der vorhergehenden Ansprüche, wobei
das Entscheidungsmodul basierend auf dem Ort des Anpassungsagenten in dem Pfad der Session von dem Empfänger zu der Quelle und basierend darauf, ob der Anpassungsagent einen Verzweigungspunkt für die Session aufweist, entscheidet, ob der Fluss zu der Session hinzugefügt oder von ihr gestrichen wird und ob diese Information weiter Upstream oder Downstream weitergeleitet wird, wenn der Anpassungsagent Informationen über die neue Session-Zusammensetzung von einem anderen Anpassungsagenten erhält.

17. Computerprogramm, aufweisend computerausführbaren Code, um einen Computer in die Lage zu versetzen, alle Schritte eines Verfahrens gemäß einem der Ansprüche 1 bis 8 auszuführen.

## Revendications

1. Procédé pour adapter une session (300) entre une source et un récepteur par l'intermédiaire d'un réseau, dans lequel la session provenant d'une source est composée d'une pluralité de flux qui forment ensemble la session, et dans lequel le récepteur peut recevoir la totalité ou un sous-ensemble des flux de la session, et dans lequel ladite session passe par une pluralité de noeuds de réseau de ladite source vers ledit récepteur, et dans lequel une pluralité d'agents d'adaptation sont prévus dans ledit réseau, chaque agent d'adaptation étant capable d'exécuter un mécanisme d'adaptation en insérant un flux ou en extrayant un flux dans/de ladite session (420), chaque agent d'adaptation étant responsable d'un ou de plusieurs noeuds de réseau le long du trajet de la source vers ledit récepteur, ledit procédé comprenant les étapes consistant à :
recevoir par l'un desdits agents d'adaptation des paramètres de réseau indiquant l'utilisation du réseau (400) ;
exécuter un mécanisme de décision pour décider par ledit agent d'adaptation comment adapter ladite session à ladite utilisation du réseau (410) ;
insérer ou extraire un ou plusieurs flux dans/de ladite session (420) ;
informer un mécanisme d'attribution de ressource prévu dans ledit réseau d'attribuer ou de libérer des ressources de réseau en fonction dudit flux inséré ou extrait (430) ;
informer des agents d'adaptation en amont et/ou en aval concernant la nouvelle composition de session (440).

2. Procédé selon la revendication 1, dans lequel
au lieu ou en plus de ladite insertion ou extraction de flux, ledit mécanisme de décision décide de réattribuer un ou plusieurs flux de ladite session à une catégorie de services différente de la catégorie actuelle ; et
au lieu dudit mécanisme d'attribution de ressource, un mécanisme de mappage de qualité de service est informé concernant la décision dudit mécanisme de décision.

3. Procédé selon la revendication 1 ou 2, dans lequel
au lieu ou en plus de ladite insertion ou extraction de flux, ledit mécanisme de décision décide de demander audit mécanisme d'attribution de ressource de réajuster les ressources pour une catégorie de services.

4. Procédé selon l'une des revendications 1 à 3, dans lequel
une priorité est attribuée à chaque flux, et ledit mécanisme de décision décide de ladite insertion ou extraction de flux sur la base de ladite priorité desdits flux.

5. Procédé selon l'une des revendications précédentes, dans lequel
lesdites informations d'utilisation de réseau contiennent des informations de disponibilité ou non de ressources de réseau suffisantes, et
si les ressources de réseau ne sont pas suffisantes, le mécanisme de décision décide d'extraire un ou plusieurs flux, et
si les ressources de réseau sont suffisantes, il est décidé d'insérer un ou plusieurs flux.

6. Procédé selon l'une des revendications précédentes, comprenant les étapes consistant à :
maintenir l'état des flux de ladite session pour indiquer s'ils sont actifs ou en sommeil ; et dans lequel
insérer un flux dans une session correspond à le mettre dans un état actif, et
extraire un flux d'une session correspond à le mettre dans un état de sommeil ;
chacun desdits états étant réversible.

7. Procédé selon l'une des revendications précédentes, dans lequel il y a une pluralité de sessions, et ledit mécanisme de décision comprend la sélection d'une ou de plusieurs des sessions à adapter parmi ladite pluralité de sessions, et dans lequel ladite sélection est basée sur un ou plusieurs des critères suivantes :
sélectionner les sessions avec la taille d'audience la plus faible pour l'adaptation ;
sélectionner les sessions avec le coût le plus faible pour l'adaptation ;
sélectionner de préférence des sessions vidéo plutôt que des sessions audio pour l'adaptation.

8. Procédé selon l'une des revendications précédentes, dans lequel
un agent d'adaptation recevant des informations d'un autre agent d'adaptation concernant une nouvelle composition de session décide, sur la base de l'emplacement dudit agent d'adaptation dans le trajet de ladite session dudit récepteur vers ladite source et en se basant sur le fait que ledit agent d'adaptation a ou non un point de branchement pour ladite session, s'il convient d'insérer ou d'extraire ledit flux et si ces informations doivent être réacheminées davantage en amont ou en aval.

9. Agent pour adapter une session (300) entre une source et un récepteur par l'intermédiaire d'un réseau, dans lequel la session provenant d'une source est composée d'une pluralité de flux qui forment ensemble la session, et dans lequel ladite session passe par une pluralité de noeuds de réseau de ladite source vers ledit récepteur, ledit agent d'adaptation étant l'un d'une pluralité d'agents d'adaptation qui sont prévus dans ledit réseau, chaque agent d'adaptation étant capable d'exécuter un mécanisme d'adaptation en insérant un flux ou en extrayant un flux dans/de ladite session (420), chaque agent d'adaptation étant responsable d'un ou de plusieurs noeuds de réseau le long du trajet de la source vers ledit récepteur, ledit agent d'adaptation comprenant :
une interface pour recevoir des paramètres de réseau indiquant l'utilisation du réseau (400) ;
un module de décision pour décider comment adapter ladite session à ladite utilisation du réseau (410) ;
un module d'insertion/extraction pour insérer ou extraire un ou plusieurs flux dans/de ladite session (420) ;
un module d'informations de ressource pour informer un mécanisme d'attribution de ressource prévu dans ledit réseau d'attribuer ou de libérer des ressources de réseau en fonction dudit flux inséré ou extrait (430) ;
un module d'informations en amont/en aval pour informer des agents d'adaptation en amont et/ou en aval concernant la nouvelle composition de session (440).

10. Agent selon la revendication 9, dans lequel
au lieu ou en plus de ladite insertion ou extraction de flux, ledit module de décision décide de réattribuer un ou plusieurs flux de ladite session à une catégorie de services différente de la catégorie actuelle ; et
au lieu dudit mécanisme d'attribution de ressource, un mécanisme de mappage de qualité de service est informé concernant la décision dudit mécanisme de décision.

11. Agent selon la revendication 9 ou 10, dans lequel
au lieu ou en plus de ladite insertion ou extraction de flux, ledit module de décision décide de demander audit mécanisme d'attribution de ressource de réajuster les ressources pour une catégorie de services.

12. Agent selon l'une des revendications 9 à 11, dans lequel
une priorité est attribuée à chaque flux, et ledit mécanisme de décision décide de ladite insertion ou extraction de flux sur la base de ladite priorité desdits flux.

13. Agent selon l'une des revendications 9 à 12, dans lequel
lesdites informations d'utilisation de réseau contiennent des informations concernant la disponibilité ou non de ressources de réseau suffisantes, et
si les ressources de réseau ne sont pas suffisantes, le module de décision décide d'extraire un ou plusieurs flux, et
si les ressources de réseau sont suffisantes, il est décidé d'insérer un ou plusieurs flux.

14. Agent selon l'une des revendications 9 à 13, comprenant :
un module de maintien pour maintenir l'état des flux de ladite session pour indiquer s'ils sont actifs ou en sommeil ; et dans lequel
l'insertion d'un flux dans une session correspond à le mettre dans un état actif, et
l'extraction d'un flux d'une session correspond à le mettre dans un état de sommeil ;
chacun desdits états étant réversible.

15. Agent selon l'une des revendications 9 à 14, dans lequel il y a une pluralité de sessions, et ledit module de décision effectue une sélection d'une ou de plusieurs sessions à adapter parmi ladite pluralité de sessions, dans lequel ladite sélection est basée sur un ou plusieurs des critères suivantes :
la sélection des sessions avec la taille d'audience la plus faible pour l'adaptation ;
la sélection des sessions avec le coût le plus faible pour l'adaptation ;
le choix de préférence de sessions vidéo plutôt que de sessions audio pour l'adaptation.

16. Agent selon l'une des revendications précédentes, dans lequel
ledit module de décision décide, sur la base de l'emplacement dudit agent d'adaptation dans le trajet de ladite session dudit récepteur vers ladite source et en se basant sur le fait que ledit agent d'adaptation a ou non un point de branchement pour ladite session, s'il convient d'insérer ou d'extraire ledit flux et si ces informations doivent être réacheminées davantage en amont ou en aval si l'agent d'adaptation a reçu des informations concernant la nouvelle composition de session d'un autre agent d'adaptation.

17. Programme informatique comprenant un code exécutable par un ordinateur pour permettre à un ordinateur d'exécuter toutes les étapes d'un procédé selon l'une des revendications 1 à 8.
